# EUROPEAN PATENT APPLICATION

(11) **EP 3 893 107 A1**
(43) Date of publication of application: **13.10.2021**
(21) Application number: 21156098.2
(22) Date of filing: 09.02.2021
(51) Int. Cl.: G06F 8/60, G06F 8/30, G06F 8/71, G06F 8/77, G06N 3/08, G06N 20/00, G06F 11/36

(54) **INTELLIGENT FEATURE DELIVERY IN A COMPUTING ENVIRONMENT**

(30) Priority: 07.04.2020 IN 202041015246; 27.05.2020 US 202016884355
(71) Applicant: Citrix Systems Inc., Fort Lauderdale, FL 33309 (US)
(72) Inventor: Sampath, Ajay Kumar Channasamudram, 560042 Bangalore, Karnataka (IN); Das, Pralay Kumar, 560042 Bangalore, Karnataka (IN); Challa, Sreekanth, 560042 Bangalore, Karnataka (IN)
(74) Representative: Hanna Moore + Curley

(57) **Abstract**

In some embodiments, a method for intelligent feature delivery in a computing environment can include: identifying, by a service executing within the computing environment, a first feature not enabled for a tenant of the computing environment; extracting, by the service, data about the first feature from one or more data sources; processing, by the service, the extracted data to generate data tokens; determining, by the service, one or more impact areas of the first feature using the data tokens; and providing, by the service, a recommendation to the tenant to enable the first feature or to not enable the first feature based on the determined impact areas.

## Description

### FIELD

The present invention relates to a method for intelligent feature delivery in a computing environment.

### BACKGROUND

In computing environments, such as cloud environments and Software as a Service (SaaS) systems, new features and updates to existing features may be routinely developed and made available to tenants (e.g., enterprises, organizations, or end users). A new feature or update can change the state of the computing environment and, as such, has the potential to introduce instability or cause a regression with respect to the functioning of existing features. Identifying a problem after a feature/update has been installed can be costly in terms of lost productivity and recovery time (e.g., person-hours spent rolling back the feature).

To limit disruption, some computing environments allow users to selectively enable or install features and updates. A tenant may decide whether the benefit of a given feature outweighs the risk that the feature will be disruptive based on information published about the new feature and knowledge of the tenant's existing feature set. This type of risk-benefit analysis can be complex and may require dedicated effort from an information technology (IT) administrator (or "admin"). Tenants of a computing environment may resist installing new features because they lack the resources to perform proper risk analysis.

For business users or tenants, choosing not to install particular features may put them at a competitive edge compared to their competitors. Moreover, feature disparity across multiple tenants in the same computing environment can lead to an inefficient allocation or usage of resources within the computing environment. For example, in a cloud environment, it may be necessary to maintain separate virtual machine (VM) images for tenants with different feature sets. As another example, performance of the computing environment may be degraded if tenants do not install performance enhancing feature updates. In the case where a feature update includes a security fix, security of the computing environment may be compromised if tenants do not install the update.

### SUMMARY

Described herein are embodiments of systems and methods for intelligent feature delivery in a computing environment. Disclosed embodiments can reduce the cost and risk involved with deploying a new feature by providing tenants with accurate risk assessment information using machine learning (ML) and automated deployment, testing, and validation. Disclosed embodiments can be used to deploy (or "rollout") features to tenants in an automated and targeted manner, improving operational efficiency and reducing cost compared to existing approaches.

According to one aspect of the disclosure, a method for intelligent feature delivery in a computing environment can include: identifying, by a service executing within the computing environment, a first feature not enabled for a tenant of the computing environment; extracting, by the service, data about the first feature from one or more data sources; processing, by the service, the extracted data to generate data tokens; determining, by the service, one or more impact areas of the first feature using the data tokens; and providing, by the service, a recommendation to the tenant to enable the first feature or to not enable the first feature based on the determined impact areas.

According to another aspect of the disclosure, a system can include a processor and a non-volatile memory storing computer program code. The computer program code, when executed on the processor, can cause the processor to execute a process operable to: identify a first feature not enabled for a tenant of a computing environment; extract data about the first feature from one or more data sources; process the extracted data to generate data tokens; determine one or more impact areas of the first feature using the data tokens; and provide a recommendation to the tenant to enable the first feature or to not enable the first feature based on the determined impact areas.

According to another aspect of the disclosure, a non-transitory computer-readable medium can store program instructions that are executable to: identify a first feature not enabled for a tenant of a computing environment; extract data about the first feature from one or more data sources; process the extracted data to generate data tokens; determine one or more impact areas of the first feature using the data tokens; and provide a recommendation to the tenant to enable the first feature or to not enable the first feature based on the determined impact areas.

In some embodiments, the determination of the impact areas of the first feature may be performed by a machine learning machine learning (ML) engine executing within the computing environment. In some embodiments, providing the recommendation to the tenant can include determining that the tenant has a second feature enabled, the second feature having at least one impact area in common with the determined impact areas of the first feature. In some embodiments, providing the recommendation to the tenant may include: executing a testing suite associated with the second feature; and providing a recommendation based on a result of executing the testing suite.

In some embodiments, the one or more data sources include at least two of: a document repository configured to store feature specifications; an issue tracking database; and a source code repository. In some embodiments, processing the extracted data can include: removing stop words from the extracted data; removing punctuation from the extracted data; performing lemmatization on the extracted data; and performing tokenization of the from the extracted data to generate the data tokens. In some embodiments, the computing environment may include a cloud computing environment.

### BRIEF DESCRIPTION OF THE DRAWINGS

Various objectives, features, and advantages of the disclosed subject matter can be more fully appreciated with reference to the following detailed description of the disclosed subject matter when considered in connection with the following drawings, in which like reference numerals identify like elements.
FIG. 1 is a diagram illustrating an example network environment of computing devices in which various aspects of the disclosure may be implemented, in accordance with an embodiment of the present disclosure.
FIG. 2 is a block diagram illustrating selective components of an example computing device in which various aspects of the disclosure may be implemented, in accordance with an embodiment of the present disclosure.
FIG. 3 is a diagram of a cloud computing environment in which various aspects of the concepts described herein may be implemented.
FIG. 4 is a diagram of an illustrative system for intelligent feature delivery, according to some embodiments of the present disclosure.
FIG. 5 is a diagram of an illustrative feature classification service that can be used within the system of FIG. 4, according to some embodiments of the present disclosure.
FIGS. 6 and 7 are flow diagrams showing processing that may occur within the system of FIG. 4, according to some embodiments of the present disclosure.

The drawings are not necessarily to scale, or inclusive of all elements of a system, emphasis instead generally being placed upon illustrating the concepts, structures, and techniques sought to be protected herein.

### DETAILED DESCRIPTION

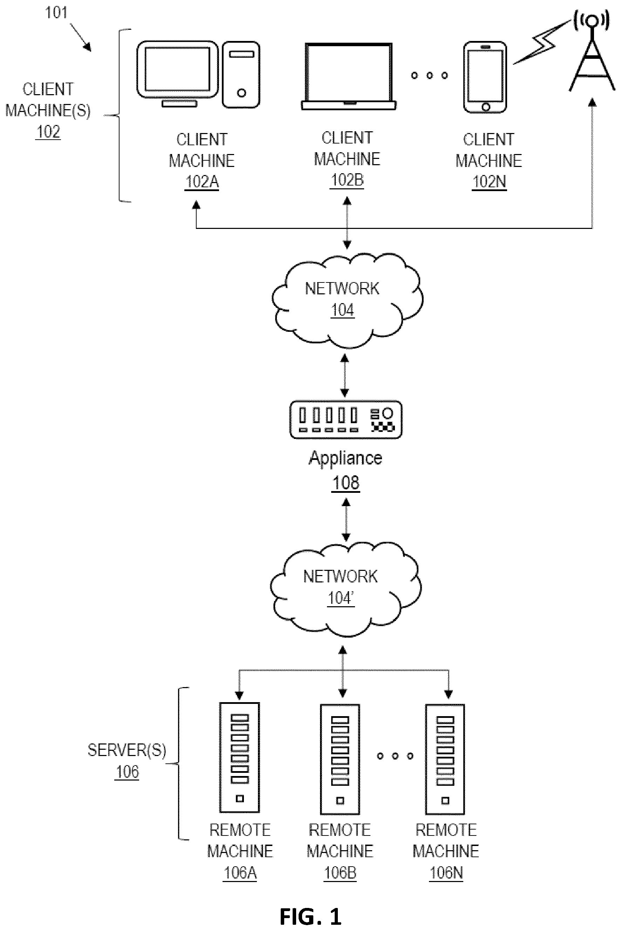

Referring now to FIG. 1, shown is an example network environment 101 of computing devices in which various aspects of the disclosure may be implemented, in accordance with an embodiment of the present disclosure. As shown, environment 101 includes one or more client machines 102A-102N, one or more remote machines 106A-106N, one or more networks 104, 104', and one or more appliances 108 installed within environment 101. Client machines 102A-102N communicate with remote machines 106A-106N via networks 104, 104'.

In some embodiments, client machines 102A-102N communicate with remote machines 106A-106N via an intermediary appliance 108. The illustrated appliance 108 is positioned between networks 104, 104' and may also be referred to as a network interface or gateway. In some embodiments, appliance 108 may operate as an application delivery controller (ADC) to provide clients with access to business applications and other data deployed in a datacenter, a cloud computing environment, or delivered as Software as a Service (SaaS) across a range of client devices, and/or provide other functionality such as load balancing, etc. In some embodiments, multiple appliances 108 may be used, and appliance(s) 108 may be deployed as part of network 104 and/or 104'.

Client machines 102A-102N may be generally referred to as client machines 102, local machines 102, clients 102, client nodes 102, client computers 102, client devices 102, computing devices 102, endpoints 102, or endpoint nodes 102. Remote machines 106A-106N may be generally referred to as servers 106 or a server farm 106. In some embodiments, a client device 102 may have the capacity to function as both a client node seeking access to resources provided by server 106 and as a server 106 providing access to hosted resources for other client devices 102A-102N. Networks 104, 104' may be generally referred to as a network 104. Networks 104 may be configured in any combination of wired and wireless networks.

Server 106 may be any server type such as, for example: a file server; an application server; a web server; a proxy server; an appliance; a network appliance; a gateway; an application gateway; a gateway server; a virtualization server; a deployment server; a Secure Sockets Layer Virtual Private Network (SSL VPN) server; a firewall; a web server; a server executing an active directory; a cloud server; or a server executing an application acceleration program that provides firewall functionality, application functionality, or load balancing functionality.

Server 106 may execute, operate or otherwise provide an application that may be any one of the following: software; a program; executable instructions; a virtual machine; a hypervisor; a web browser; a web-based client; a client-server application; a thin-client computing client; an ActiveX control; a Java applet; software related to voice over internet protocol (VoIP) communications like a soft IP telephone; an application for streaming video and/or audio; an application for facilitating real-time-data communications; a HTTP client; a FTP client; an Oscar client; a Telnet client; or any other set of executable instructions.

In some embodiments, server 106 may execute a remote presentation services program or other program that uses a thin-client or a remote-display protocol to capture display output generated by an application executing on server 106 and transmit the application display output to client device 102.

In yet other embodiments, server 106 may execute a virtual machine providing, to a user of client device 102, access to a computing environment. Client device 102 may be a virtual machine. The virtual machine may be managed by, for example, a hypervisor, a virtual machine manager (VMM), or any other hardware virtualization technique within server 106.

In some embodiments, network 104 may be: a local-area network (LAN); a metropolitan area network (MAN); a wide area network (WAN); a primary public network; and a primary private network. Additional embodiments may include a network 104 of mobile telephone networks that use various protocols to communicate among mobile devices. For short range communications within a wireless local-area network (WLAN), the protocols may include 802.11, Bluetooth, and Near Field Communication (NFC).

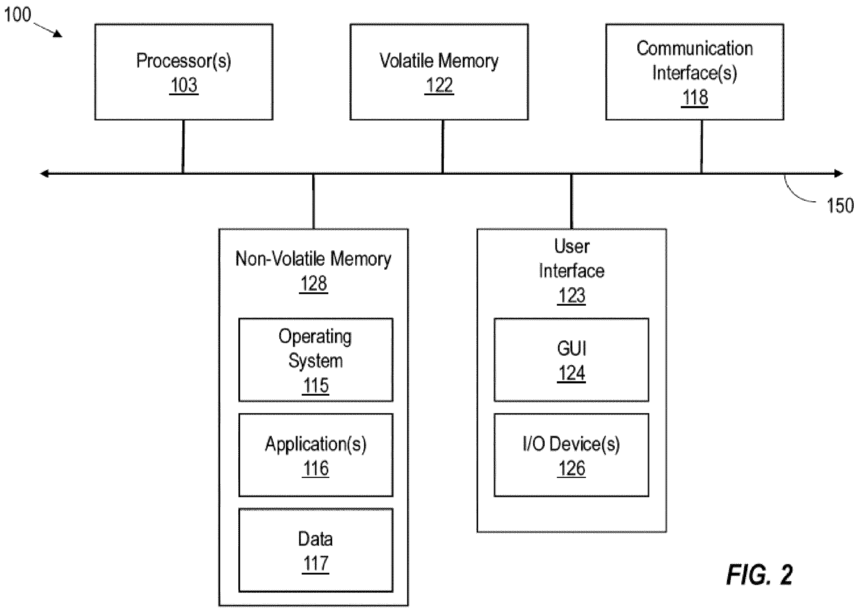

FIG. 2 is a block diagram illustrating selective components of an example computing device 100 in which various aspects of the disclosure may be implemented, in accordance with an embodiment of the present disclosure. For instance, client devices 102, appliances 108, and/or servers 106 of FIG. 1 can be substantially similar to computing device 100. As shown, computing device 100 includes one or more processors 103, a volatile memory 122 (e.g., random access memory (RAM)), a non-volatile memory 128, a user interface (UI) 123, one or more communications interfaces 118, and a communications bus 150.

Non-volatile memory 128 may include: one or more hard disk drives (HDDs) or other magnetic or optical storage media; one or more solid state drives (SSDs), such as a flash drive or other solid-state storage media; one or more hybrid magnetic and solid-state drives; and/or one or more virtual storage volumes, such as a cloud storage, or a combination of such physical storage volumes and virtual storage volumes or arrays thereof.

User interface 123 may include a graphical user interface (GUI) 124 (e.g., a touchscreen, a display, etc.) and one or more input/output (I/O) devices 126 (e.g., a mouse, a keyboard, a microphone, one or more speakers, one or more cameras, one or more biometric scanners, one or more environmental sensors, and one or more accelerometers, etc.).

Non-volatile memory 128 stores an operating system 115, one or more applications 116, and data 117 such that, for example, computer instructions of operating system 115 and/or applications 116 are executed by processor(s) 103 out of volatile memory 122. In some embodiments, volatile memory 122 may include one or more types of RAM and/or a cache memory that may offer a faster response time than a main memory. Data may be entered using an input device of GUI 124 or received from I/O device(s) 126. Various elements of computing device 100 may communicate via communications bus 150.

The illustrated computing device 100 is shown merely as an example client device or server and may be implemented by any computing or processing environment with any type of machine or set of machines that may have suitable hardware and/or software capable of operating as described herein.

Processor(s) 103 may be implemented by one or more programmable processors to execute one or more executable instructions, such as a computer program, to perform the functions of the system. As used herein, the term "processor" describes circuitry that performs a function, an operation, or a sequence of operations. The function, operation, or sequence of operations may be hard coded into the circuitry or soft coded by way of instructions held in a memory device and executed by the circuitry. A processor may perform the function, operation, or sequence of operations using digital values and/or using analog signals.

In some embodiments, the processor can be embodied in one or more application specific integrated circuits (ASICs), microprocessors, digital signal processors (DSPs), graphics processing units (GPUs), microcontrollers, field programmable gate arrays (FPGAs), programmable logic arrays (PLAs), multi-core processors, or general-purpose computers with associated memory.

Processor 103 may be analog, digital or mixed-signal. In some embodiments, processor 103 may be one or more physical processors, or one or more virtual (e.g., remotely located or cloud computing environment) processors. A processor including multiple processor cores and/or multiple processors may provide functionality for parallel, simultaneous execution of instructions or for parallel, simultaneous execution of one instruction on more than one piece of data.

Communications interfaces 118 may include one or more interfaces to enable computing device 100 to access a computer network such as a Local Area Network (LAN), a Wide Area Network (WAN), a Personal Area Network (PAN), or the Internet through a variety of wired and/or wireless connections, including cellular connections.

In described embodiments, computing device 100 may execute an application on behalf of a user of a client device. For example, computing device 100 may execute one or more virtual machines managed by a hypervisor. Each virtual machine may provide an execution session within which applications execute on behalf of a user or a client device, such as a hosted desktop session. Computing device 100 may also execute a terminal services session to provide a hosted desktop environment. Computing device 100 may provide access to a remote computing environment including one or more applications, one or more desktop applications, and one or more desktop sessions in which one or more applications may execute.

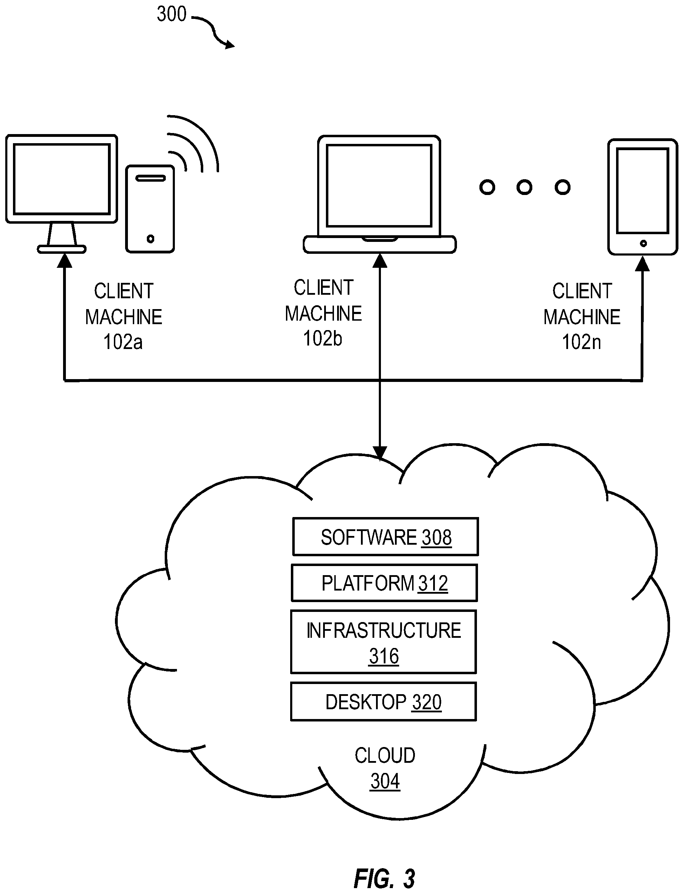

Referring to FIG. 3, a cloud computing environment 300 is depicted, which may also be referred to as a cloud environment, cloud computing or cloud network. The cloud computing environment 300 can provide the delivery of shared computing services and/or resources to multiple users or tenants. For example, the shared resources and services can include, but are not limited to, networks, network bandwidth, servers, processing, memory, storage, applications, virtual machines, databases, software, hardware, analytics, and intelligence.

In the cloud computing environment 300, one or more clients 102a-102n (such as those described above) are in communication with a cloud network 304. The cloud network 304 may include back-end platforms, e.g., servers, storage, server farms or data centers. The users or clients 102a-102n can correspond to a single organization/tenant or multiple organizations/tenants. More particularly, in one example implementation the cloud computing environment 300 may provide a private cloud serving a single organization (e.g., enterprise cloud). In another example, the cloud computing environment 300 may provide a community or public cloud serving multiple organizations/tenants.

In some embodiments, a gateway appliance(s) or service may be utilized to provide access to cloud computing resources and virtual sessions. By way of example, Citrix Gateway, provided by Citrix Systems, Inc., may be deployed on-premises or on public clouds to provide users with secure access and single sign-on to virtual, SaaS and web applications. Furthermore, to protect users from web threats, a gateway such as Citrix Secure Web Gateway may be used. Citrix Secure Web Gateway uses a cloud-based service and a local cache to check for URL reputation and category.

In still further embodiments, the cloud computing environment 300 may provide a hybrid cloud that is a combination of a public cloud and a private cloud. Public clouds may include public servers that are maintained by third parties to the clients 102a-102n or the enterprise/tenant. The servers may be located off-site in remote geographical locations or otherwise.

The cloud computing environment 300 can provide resource pooling to serve multiple users via clients 102a-102n through a multi-tenant environment or multi-tenant model with different physical and virtual resources dynamically assigned and reassigned responsive to different demands within the respective environment. The multi-tenant environment can include a system or architecture that can provide a single instance of software, an application or a software application to serve multiple users. In some embodiments, the cloud computing environment 300 can provide on-demand self-service to unilaterally provision computing capabilities (e.g., server time, network storage) across a network for multiple clients 102a-102n. By way of example, provisioning services may be provided through a system such as Citrix Provisioning Services (Citrix PVS). Citrix PVS is a software-streaming technology that delivers patches, updates, and other configuration information to multiple virtual desktop endpoints through a shared desktop image. The cloud computing environment 300 can provide an elasticity to dynamically scale out or scale in response to different demands from one or more clients 102. In some embodiments, the cloud computing environment 300 can include or provide monitoring services to monitor, control and/or generate reports corresponding to the provided shared services and resources.

In some embodiments, the cloud computing environment 300 may provide cloud-based delivery of different types of cloud computing services, such as Software as a service (SaaS) 308, Platform as a Service (PaaS) 312, Infrastructure as a Service (IaaS) 316, and Desktop as a Service (DaaS) 320, for example. IaaS may refer to a user renting the use of infrastructure resources that are needed during a specified time period. IaaS providers may offer storage, networking, servers or virtualization resources from large pools, allowing the users to quickly scale up by accessing more resources as needed. Examples of IaaS include AMAZON WEB SERVICES provided by Amazon.com, Inc., of Seattle, Washington, RACKSPACE CLOUD provided by Rackspace US, Inc., of San Antonio, Texas, Google Compute Engine provided by Google Inc. of Mountain View, California, or RIGHTSCALE provided by RightScale, Inc., of Santa Barbara, California.

PaaS providers may offer functionality provided by IaaS, including, e.g., storage, networking, servers or virtualization, as well as additional resources such as, e.g., the operating system, middleware, or runtime resources. Examples of PaaS include WINDOWS AZURE provided by Microsoft Corporation of Redmond, Washington, Google App Engine provided by Google Inc., and HEROKU provided by Heroku, Inc. of San Francisco, California.

SaaS providers may offer the resources that PaaS provides, including storage, networking, servers, virtualization, operating system, middleware, or runtime resources. In some embodiments, SaaS providers may offer additional resources including, e.g., data and application resources. Examples of SaaS include GOOGLE APPS provided by Google Inc., SALESFORCE provided by Salesforce.com Inc. of San Francisco, California, or OFFICE 365 provided by Microsoft Corporation. Examples of SaaS may also include data storage providers, e.g. Citrix ShareFile from Citrix Systems, DROPBOX provided by Dropbox, Inc. of San Francisco, California, Microsoft SKYDRIVE provided by Microsoft Corporation, Google Drive provided by Google Inc., or Apple ICLOUD provided by Apple Inc. of Cupertino, California.

Similar to SaaS, DaaS (which is also known as hosted desktop services) is a form of virtual desktop infrastructure (VDI) in which virtual desktop sessions are typically delivered as a cloud service along with the apps used on the virtual desktop. Citrix Cloud from Citrix Systems is one example of a DaaS delivery platform. DaaS delivery platforms may be hosted on a public cloud computing infrastructure such as AZURE CLOUD from Microsoft Corporation of Redmond, Washington (herein "Azure"), or AMAZON WEB SERVICES provided by Amazon.com, Inc., of Seattle, Washington (herein "AWS"), for example. In the case of Citrix Cloud, Citrix Workspace app may be used as a single-entry point for bringing apps, files and desktops together (whether on-premises or in the cloud) to deliver a unified experience.

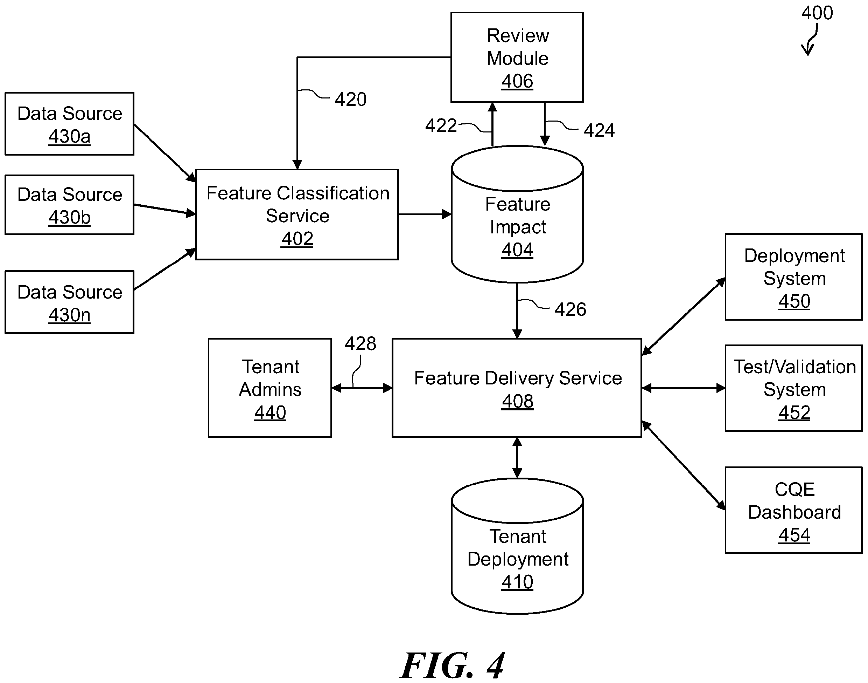

FIG. 4 shows a system 400 for intelligent feature delivery, according to some embodiments of the present disclosure. The illustrative system 400 includes a feature classification service 402, a review module 406, and a feature delivery service 408 that can interact with each other and with other components, systems, or services as described hereinbelow. As used herein, the terms "service" and "module" refer to a collection of hardware and/or software configured to perform and execute the processes, steps, or other functionality described in conjunction therewith.

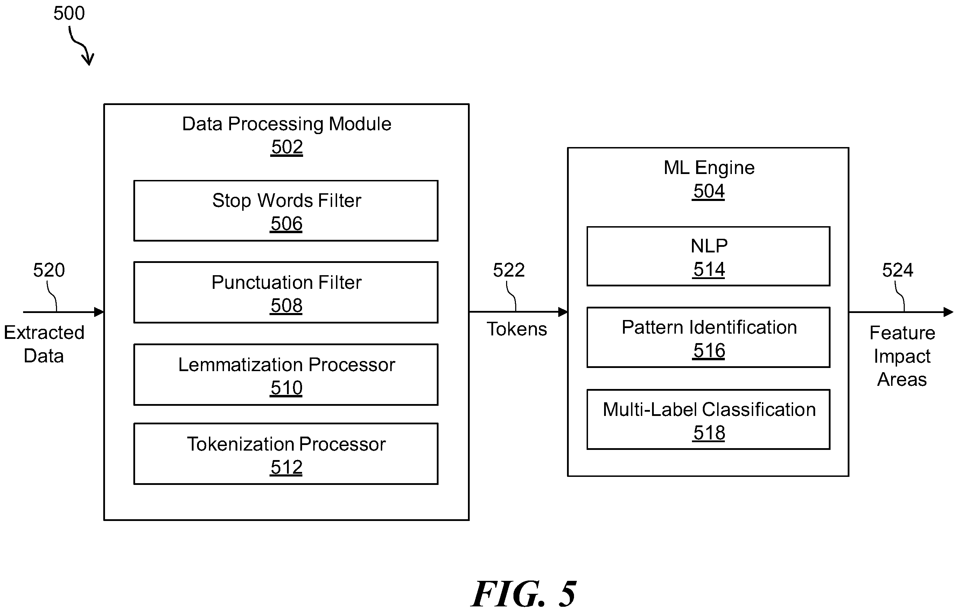

Feature classification service 402 may be configured to receive, from data sources 430a, 430b, ... 430n (430 generally), information related to available features of the computing environment and, in response, to classify one or more of the available features by impact areas (sometimes referred to as "fault prone areas"). In some embodiments, feature classification service 402 may extract feature information from data sources 430 using techniques described below in conjunction with FIG. 5.

The term "feature" as used herein can refer to any functionality provided to users or tenants within a computing environment. A feature may be implemented using software, hardware, or both. A particular feature may be updated over time, e.g., to provide enhanced functionality or to fix a bug. For brevity, the term "feature" is used herein to both a unit of functionality within the computing environment and to updates to said functionality. The computing environment may provide controls for individual tenants to enable/disable certain features from a set of available features. When a tenant chooses to enable a feature, that feature may be enabled for all users associates with the tenant.

The term "impact area" as used herein refers to any aspect of the computing environment that can be affected by a feature or features of the computing environment. Impact areas may be defined programmatically or manually, as discussed further below. In some embodiments, feature impact areas may be defined as part of a supervised learning process.

While the subject matter described herein can be used to provide intelligent delivery of a wide array of features having a wide array of impact areas, specific examples of features and impact areas are be discussed herein to help with understanding the disclosure. One example of a feature is single sign-on (SSO), which allows a user to log a single time to gain access to multiple applications, services, or systems. Another example of a feature is multi-factor authentication (MFA), which is a security measure in which a user access only after successfully presenting two or more pieces of evidence (or factors), such as password and a one-time access code. Both SSO and MFA may impact user authentication within the computing environment and, as such, "user authentication" may be defined as an impact area within the system 400. Another example of features are payment options such as, Pay by Card and Cash on Delivery. For both features, "payment" may be defined as an impact area within the system 400. The disclosure is not limited to any particular types of features or impact areas.

Data sources 430 can include applications, repositories, databases, or other sources of information related to features of the computing environment. For example, data sources 430 can include a project management system used by product managers, developers, quality assurance (QA) engineers, and other "internal" persons involved in the planning, development, and deployment of features within the computing environment. As another example, data sources 430 can include a blog, knowledge base, user forum, support documents, or other information related to features of the computing environment and made "externally" available to tenants or the public at large. As yet another example, data sources 430 can include an issue tracking system or customer relationship management (CRM) system used both internally and externally to report and track bugs, enhancements, and other feature-related issues within the computing environment. In some embodiments, data sources 430 can include a source code repository, such as a version-control system for tracking changes in source code during software development. Data sources 430 may provide information in a variety of formats, including plain text, DOCX, HTML, XML, JSON, CSV, XLSX, and various other text-based formats.

In general, the information or data extracted from a data source 430 may be unstructured (or "raw"), meaning the data does not have a pre-defined data model or is not organized in a pre-defined manner. As discussed further below in the context of FIG. 5, in some embodiments feature classification service 402 can process the extracted data and generate a sequence of tokens or other data structure suitable for input to a ML engine.

Feature classification service 402 may include a machine learning (ML) engine and one or more models trained with a set of keywords and keyword combinations associated with different feature impact areas based on information within data sources 430. In some embodiments, a model can be programmatically trained starting with a pre-trained model, such as Universal Language Model with Fine Tuning (ULM-FiT). ULM-FiT is a model for natural language processing (NLP) that can act on data to generate its own classification and mapping tables (e.g., mappings from keywords and/or feature names to impact areas). In some embodiments, a supervised or manual training process can be used. The trained model or models can then be used to predict or classify the impact areas for particular features of the computing environment.

The predicted feature impact areas, i.e., the output of classification service 402, may be stored in a feature impact database 404. In some embodiments, feature impact database 404 may be configured to store a mapping between feature names and predicted impacts areas. Database 404 can store a many-to-many map wherein a given feature can be associated with multiple impact areas and a given impact area can be associated multiple features. In some embodiments, database 404 may include a Structured Query Language (SQL) database.

Review module 406 configured to receive input from an administrative user of the system 400, referred to herein as the "reviewer." Review module 406 may include a user interface (UI) via which a reviewer can manually label or otherwise associate keywords and keyword combinations with feature impact areas. The user input may be provided as training data 420 to feature classification service 402 for training and improving the accuracy of its ML models.

In some embodiments, review module 406 can enable a user to review feature impact predictions made by feature classification service 402, and to provide feedback and training.

For example, review module 406 may read feature impact information from feature impact database 404 (as indicated by arrow 422) and then display predicted impact areas along with the associated keywords or feature names to the reviewer via a UI. The UI can allow the reviewer to modify the predicted impact areas for a given feature or set of keywords. For example, the reviewer can add impact areas they deem to be missing or remove impact areas they deem to be incorrect. This and other feedback information can be written back to the feature impact database 404 (arrow 424) and/or provided as training data to feature classification service 402 (arrow 420). In some embodiments, the feature impact information generated by the ML engine of service 402 may be automatically fed back to the model for continuous learning of the model. That is, arrows 422 and 420 of FIG. 4 may correspond to an automatic feedback loops in addition to a manual review feedback loop.

Feature delivery service 408 can use the feature impact area predictions made by classification service 402 in order to intelligently assist tenants of the computing environment with feature rollout. Feature delivery service 408 can retrieve lists of features enabled for particular tenants and compare the list to a list of available features to identify opportunities for tenants to enable additional features. In some embodiments, information about which features are enabled for which tenants may be stored in a tenant deployment database 410. In other embodiments, this information may be retrieved from an external system such as a customer relationship management (CRM) system.

Feature delivery service 408 may generate, for a particular tenant, a list of features that are available within the computing environment but that are not enabled for the tenant. Such features are referred to herein as "not enabled" or "candidate" features. Having identified a candidate feature for the tenant, feature delivery service 408 may determine the candidate feature's impact areas as predicated by feature classification service 402. In some embodiments, feature delivery service 408 may retrieve feature impact information from database 404, as indicated by arrow 426. Feature delivery service 408 may then determine which of the tenant's existing/enabled features have impact areas that overlap with those of the candidate feature and, thus, would likely be impacted if the candidate feature were enabled. In this disclosure, a "likely" impact is an impact that is expected to occur with some statistical likelihood determined, in part, by the accuracy of the ML models used by feature classification service 402.

By way of a simple and non-limiting example, assume that the computing environment has available both an SSO feature and an MFA feature available and that a tenant has only the SSO feature enabled, then feature delivery service 408 may (1) identify MFA as a candidate feature, (2) determine that both MFA and SSO are predicted to impact "user authentication, and (3), as a result, determine that enabling MFO would likely impact the tenant's existing SSO feature.

After determining which feature areas and/or existing features of a tenant are likely impacted by the candidate feature, feature delivery service 408 can take one or more actions to assist the tenant with feature rollout. In some embodiments, feature delivery service 450 can interface with a deployment system 450 to perform automated deployment of the candidate feature alongside the tenant's existing features. Deployment system 450 may be configured to perform so-canned "canary deployments" of candidate features, meaning the deployment only impacts a single tenant or a subset of tenants within the computing environment. In some embodiments, feature delivery service 408 may coordinate with deployment system 450 to deploy the candidate feature, alongside the tenant's existing features, to a testing or "sandbox" environment such that the deployment does not impact the tenant's normal operations within the computing environment. In some embodiments, deployment system 450 may send deployment status information back to feature delivery service 408 indicating, for example, if a deployment was successfully completed or one or more errors that occurred with a deployment. In some embodiments, deployment system 450 may use "deployment rings" for progressively adding/updating features in a WINDOWS computing environment.

In some embodiments, feature delivery service 408 can interface with a test/validation system 452 to perform automated testing/validation of the feature areas and/or existing features of a tenant that are likely impacted by the candidate feature. For example, within the computing environment there may be automated suites designed to test/validate that particular features, or feature impact areas, function as expected and have not regressed as a result of new feature or changes introduced into the system. As another example, there may be automated suites for testing the performance of various components of the computing environment. Service 408 may send a request to test/validation system 452 to invoke a particular test/validation suite. In response test/validation system 452 may execute the test/validation suite and return the result of testing/validation to feature delivery service 408. In the case where a computing environment includes a large number of automated test/validation suites (e.g., hundreds or thousands of such suites), the approach described herein can provide a significant reduction in resource usage within the computing environment by executing only those suites that cover those areas/features likely impacted the candidate feature. That is, the subject matter disclosed herein allows for targeted testing, validation, and deployment.

In some embodiments, feature delivery service 408 may use deployment system 450 in conjunction with test/validation system 452 to provide targeted testing/validation. For example, service 408 may first use deployment system 450 to create a sandbox environment comprising the candidate feature alongside the tenant's existing features. Service 408 may then use test/validation system 452 to execute particular test/validation suites (i.e., suites designed to cover likely impacted areas/features) within the sandbox environment. Thus, embodiments of the present disclosure allow the impact of new features to be systematically tested and validated in a sandbox environment without risk of disruption to a tenant's normal operations.

In some embodiments, feature delivery service 408 may store the results of deployments and/or automated testing/validation in a tenant deployment database 410 where that can subsequent be accessed to provide feature rollout recommendations/reports to tenants, as discussed further below. In some embodiments, feature delivery service 408 can provide such automation results to a certified quality engineer (CQE) dashboard 454. The CQE dashboard 454 may be used by administrators/supervisors of the computing environment to monitor the operation and effectiveness of the intelligent feature delivery system 400. For example, CQE dashboard 454 can be used to monitor feature adoption rate, meaning the number of percentage of tenants that enable particular features over time.

The results of the automated deployment, testing, and/or validation can be summarized and provided to a tenant admin 440 tasked with deciding whether or not enable/deploy the new feature. In some embodiments, tenant admins 404 can interface with feature delivery service 408 via an API 428. In more detail, a tenant admin 440 can use a user device such as a smartphone, tablet, laptop, desktop, workstation that sends API requests to feature delivery service 408 and receives corresponding API responses. In some embodiments, feature delivery service 408 can provide information to the tenant admin 440 recommending that a candidate feature, or set of candidate features, should be enabled or should not be enabled based on the results of the automation. In some embodiments, feature delivery service 408 may provide a risk score associate with the candidate feature or features based on the results of the automation. In some embodiments, feature delivery service 408 may generate and send emails to tenant admins that include any or all of the aforementioned feature rollout information.

In some embodiments, system 400 can provide health reports to tenant admins 404. A health report can include results of the automated testing/validation and may provide details about risks the tenant would face by enabling a candidate feature, such which existing features are likely to break and negative performance impacts due to the candidate feature.

The various components of the system 400 may be connected as shown in FIG. 4 or in any other suitable manner. The system components may be connected by one or more wired or wireless communication paths. The illustrative system 400 may be implement within, or otherwise used in conjunction with, a computing environment, such as network environment 101 of FIG. 1 or cloud computing environment 300 of FIG. 3. For example, services 402 and/or service 408 may be implemented as services within cloud 304 of FIG. 3. In some embodiments, services 402 and 408 may be provided as a single cloud service.

System 400 can be utilized by one or more tenants or users of the computing environment to assist with feature assessment and workflow autonomation. In some embodiments, system 400 can be used by many tenants in a multi-tenant computing environment, such as a cloud environment or a SaaS system. In some embodiments, system 400 can be used by a single tenant (e.g., in an on-premises network environment) or by a single user (e.g., on a workstation, desktop, laptop, or other end user computing device). In some embodiments, subject matter disclosed herein can be provide within stand-alone tool for feature assessment and workflow automation.

FIG. 5 shows a feature classification service 500, according to some embodiments of the present disclosure. The illustrative service 500 can be implemented within a system for intelligent feature delivery, such as system 400 of FIG. 4 (e.g., service 500 of FIG. 5 may be the same as or similar to service 402 of FIG. 4). The feature classification service 500 can include a data processing module 502 and a machine learning (ML) engine 504.

Data processing module 502 can receive, as input, data extracted 520 from one or more data sources, such as data sources 430 described above in the context of FIG. 4. The extracted data 520 may include unstructured or "raw" data. Extracted data 520 can include, for example, plain text, DOCX, HTML, XML, JSON, or another form of text-based data. Data processing module 502 can use one or more techniques to transform the extracted data 520 into a sequence of tokens 522 for input to the ML engine 504.

In the embodiment of FIG. 5, data processing module 502 can include a stop words filter 506, a punctuation filter 508, a lemmatization processor 510, and a tokenization processor (or "tokenizer") 512. As used herein, the terms "filter" and "processor" refer to a collection of hardware and/or software configured to perform and execute the processes, steps, or other functionality described in conjunction therewith.

Stop words filter 506 may remove so-called "stop words" from the extracted data 520. A "stop word" is a commonly used word (such as "the") that is generally of little value to the ML engine 504 during training and/or prediction. In some embodiments, filter 506 may filter out stop words from a predetermined list of stop words. Punctuation filter 508 may remove punctuation such as periods, commas, exclamation points, colons, semicolons, etc. from the extracted data 520. In some embodiments, data processing module 502 may filter out words that include characters not within a character set or alphabet supported by ML engine 504. That is, data processing module 502 may filter out "noise."

Lemmatization processor 510 may perform stemming or lemmatization from the extracted data 520. Lemmatization is a process of reducing inflected words to their root form ensuring. Tokenizer processor 512 may generate a sequence of tokens corresponding to individual words from the extracted data 520. The generated tokens may be provided as input 522 to the ML engine, as shown in FIG. 5.

The filters and processors 506, 508, 510, and 512 can be involved sequentially in the order described above or in any other suitable order. As a simple explain, assume the input data is "The feature lets the user create a PIN for enabling two-step authentication." First, stop words filter 506 may produce the text "feature lets user create PIN enabling two-step authentication." Next, punctuation filter 508 may produce the text "feature lets user create PIN enabling two step authentication." Next, lemmatization processor 510 may produce "feature let user create PIN enable two step authentication." Finally, tokenizer processor 512 may produce the sequence ("feature" "let" "user" "create" "PIN" "enable" "two" "step" "authentication").

ML engine 504 can use the tokens 502 to predict the associated feature impact areas 524. ML engine 504 can include one or more models trained with keywords and keyword combinations associated with different feature impact areas. As shown in FIG. 5, ML engine 504 can include one or more stages such as natural language processing (NLP) 514, pattern identification 516, and multi-label classification 518.

In some embodiments, one or more stages 514, 516, 518 of the ML engine 504 can utilize a pre-trained model such as ULM-FiT for text classification. A pre-trained model such as ULM-FiT may be trained with a dataset sufficiently large to enable the model to understand word embeddings of natural language and thus provide accurate results. The ML engine 504 can leverage knowledge within the pre-trained model using a transfer learning technique.

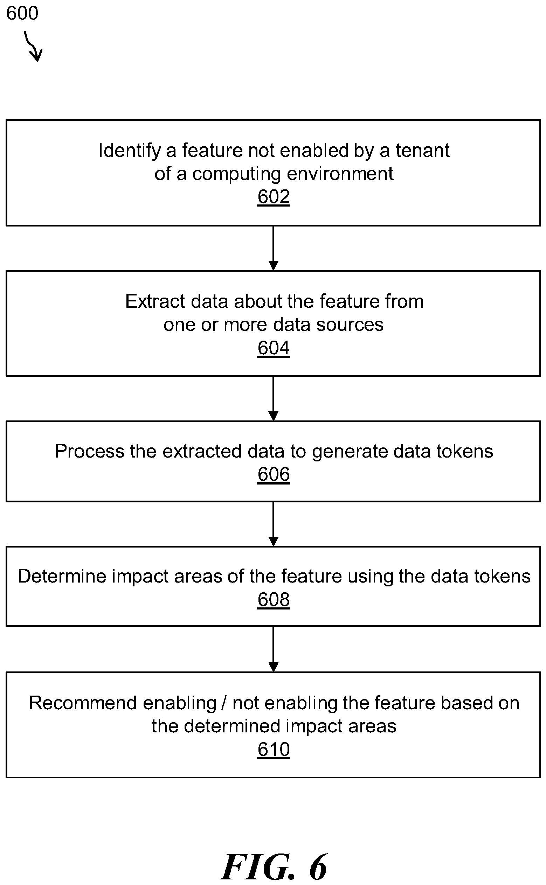

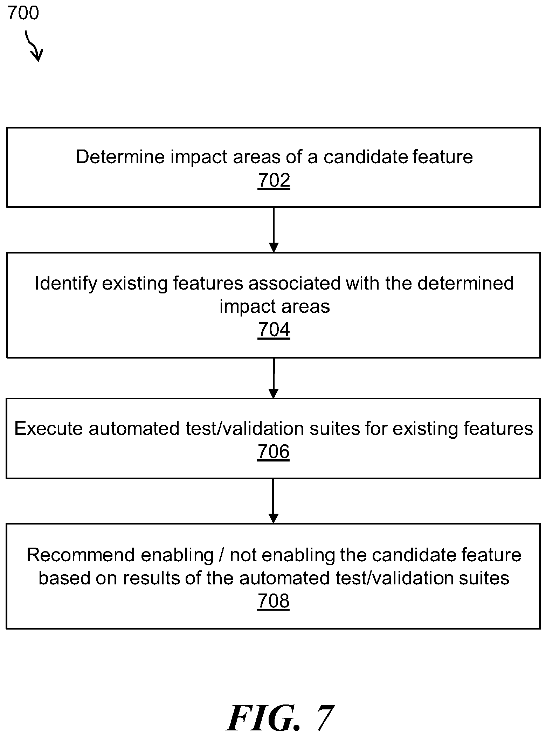

FIGS. 6 and 7 show processing that can be implemented within or otherwise utilized by a system for intelligent feature delivery, such as system 400 of FIG. 4.

Referring to FIG. 6, an illustrative method 600 can begin at block 602 by identifying a feature ("candidate feature") that is not enabled by a tenant of a computing environment (e.g., a cloud or other multi-tenant environment).

At block 604, data about candidate feature can be extracted from one or more data sources, such as data sources 430 described above in the context of FIG. 4. The extracted data can include, for example, plain text, DOCX, HTML, XML, JSON, or another form of text-based data.

At block 606, the extracted data can be processed to generate data tokens. In some embodiments, the processing can include filtering out stop words, punctuation, and/or characters not within a supported character set or alphabet. In some embodiments, the processing can include performing lemmatization. These and other processing techniques that can be used are discussed above in the context of FIG. 5.

At block 608, one or more impact areas of the candidate feature can be determined using the data tokens. In some embodiments, the impact areas may be predicted using a machine learning (ML) engine and models trained with keywords and keyword combinations associated with various feature impact areas. Examples of ML techniques that can be used to determine the impact areas of the candidate feature are described above in the context of FIG. 5.

At block 610, a recommendation or report may be provided to the tenant regarding whether the tenant should enable the candidate feature or to not. The recommendation/report may be based on the determined impacted areas. For example, if the tenant has an existing feature that has overlapping impact areas with the candidate feature, a recommendation may be provided to the tenant to not enable the candidate feature, or to only enable the candidate feature after testing/validating compatibility with the existing feature. In some embodiments, automated testing or validation may be performed, as described below in the context of FIG. 7.

Referring to FIG. 7, an illustrative method 700 can begin at block 702, where one or more impact areas are determined for a candidate feature (e.g., a feature of a computing environment that is not enabled by a particular tenant). At block 704, one or more existing features associated with the determined impact areas are identified (e.g., existing features enabled by the tenant). At block 706, one or more automated test/validation suites associated with the existing features may be executed. Examples of such automation suites are detailed above in the context of FIG. 4. At block 708, based on the results of the automated test/validation suites, a recommendation may be provided to enable, or not enable, the candidate feature.

The subject matter described herein can be implemented in digital electronic circuitry, or in computer software, firmware, or hardware, including the structural means disclosed in this specification and structural equivalents thereof, or in combinations of them. The subject matter described herein can be implemented as one or more computer program products, such as one or more computer programs tangibly embodied in an information carrier (e.g., in a machine-readable storage device), or embodied in a propagated signal, for execution by, or to control the operation of, data processing apparatus (e.g., a programmable processor, a computer, or multiple computers). A computer program (also known as a program, software, software application, or code) can be written in any form of programming language, including compiled or interpreted languages, and it can be deployed in any form, including as a stand-alone program or as a module, component, subroutine, or another unit suitable for use in a computing environment. A computer program does not necessarily correspond to a file. A program can be stored in a portion of a file that holds other programs or data, in a single file dedicated to the program in question, or in multiple coordinated files (e.g., files that store one or more modules, sub programs, or portions of code). A computer program can be deployed to be executed on one computer or on multiple computers at one site or distributed across multiple sites and interconnected by a communication network.

The processes and logic flows described in this specification, including the method steps of the subject matter described herein, can be performed by one or more programmable processors executing one or more computer programs to perform functions of the subject matter described herein by operating on input data and generating output. The processes and logic flows can also be performed by, and apparatus of the subject matter described herein can be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processor of any kind of digital computer. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of nonvolatile memory, including by ways of example semiconductor memory devices, such as EPROM, EEPROM, flash memory device, or magnetic disks. The processor and the memory can be supplemented by, or incorporated in, special purpose logic circuitry.

## Claims

1. A method for intelligent feature delivery in a computing environment, the method comprising:
identifying, by a service executing within the computing environment, a first feature not enabled for a tenant of the computing environment;
extracting, by the service, data about the first feature from one or more data sources;
processing, by the service, the extracted data to generate data tokens;
determining, by the service, one or more impact areas of the first feature using the data tokens; and
providing, by the service, a recommendation to the tenant to enable the first feature or to not enable the first feature based on the determined impact areas.

2. The method of claim 1, wherein the determination of the impact areas of the first feature is performed by a machine learning machine learning, ML, engine executing within the computing environment.

3. The method of claim 1, wherein providing the recommendation to the tenant includes:
determining that the tenant has a second feature enabled, the second feature having at least one impact area in common with the determined impact areas of the first feature.

4. The method of claim 3, wherein providing the recommendation to the tenant includes:
executing a testing suite associated with the second feature; and
providing a recommendation based on a result of executing the testing suite.

5. The method of claim 1, wherein the one or more data sources include at least two of:
a document repository configured to store feature specifications;
an issue tracking database; and
a source code repository.

6. The method of claim 1, wherein processing the extracted data includes:
removing stop words from the extracted data;
removing punctuation from the extracted data;
performing lemmatization on the extracted data; and
performing tokenization of the from the extracted data to generate the data tokens.

7. The method of claim 1, wherein the computing environment comprises a cloud computing environment.

8. A system comprising:
a processor; and
a non-volatile memory storing computer program code that when executed on the processor causes the processor to execute a process operable to:
identify a first feature not enabled for a tenant of a computing environment;
extract data about the first feature from one or more data sources;
process the extracted data to generate data tokens;
determine one or more impact areas of the first feature using the data tokens; and
provide a recommendation to the tenant to enable the first feature or to not enable the first feature based on the determined impact areas.

9. The system of claim 8, wherein the determination of the impact areas of the first feature is performed by a machine learning machine learning, ML,) engine executing within the computing environment.

10. The system of claim 8, wherein the one or more data sources include at least two of:
a document repository configured to store feature specifications;
an issue tracking database; and
a source code repository.

11. The system of claim 8, wherein the computing environment comprises a cloud computing environment.

12. A non-transitory computer-readable medium storing program instructions that are executable to:
identify a first feature not enabled for a tenant of a computing environment;
extract data about the first feature from one or more data sources;
process the extracted data to generate data tokens;
determine one or more impact areas of the first feature using the data tokens; and
provide a recommendation to the tenant to enable the first feature or to not enable the first feature based on the determined impact areas.

13. The non-transitory computer-readable medium of claim 12, wherein the one or more data sources include at least two of:
a document repository configured to store feature specifications;
an issue tracking database; and
a source code repository.
